# EUROPÄISCHE PATENTANMELDUNG

(11) **EP 1 119 163 A2**
(43) Veröffentlichungstag der Anmeldung: **25.07.2001**
(21) Anmeldenummer: 00125611.4
(22) Anmeldetag: 23.11.2000
(51) Int. Cl.: H04M 1/725, H04Q 7/32

(54) **Vorrichtung zur direkten Herstellung von Telekommunikationsverbindungen von einer TK-Anlage ins Mobilfunknetz**

(30) Priorität: 19.01.2000 DE 10002027
(71) Anmelder: Tenovis GmbH & Co. KG, 60326 Frankfurt (DE)
(72) Erfinder: Herzberg, Lutz-Ronald, 60437 Frankfurt (DE)
(74) Vertreter: Beck, Josef

(57) **Zusammenfassung**

Eine Vorrichtung zur direkten Herstellung von Telekommunikationsverbindungen von einer TK-Anlage ins Mobilfunknetz umfaßt eine Schnittstelle zu einem konventionellen Mobiltelefon. Hieran ist ein konventionelles Mobiltelefon über dessen Zubehörschnittstelle anschließbar.

## Beschreibung

### Stand der Technik

Die Erfindung geht aus von der Gattung, wie sie im unabhängigen Patentanspruch 1 wiedergegeben ist.

Die zunehmende Verbreitung von Mobiltelefonen veranlaßt immer häufiger auch Gespräche vom Telefon-Festnetz in die Mobilfunknetze, insbesondere die GSM-Netze, z. B. bei Firmen, die im Außendienst tätige Mitarbeiter haben, welche mit Mobiltelefonen ausgerüstet sind. Wegen der Tarifpolitik der Netzbetreiber ist es oft preisgünstiger, wenn ein Telefonat direkt über das Mobilfunknetz geführt wird als vom Festnetz ins Mobilfunknetz. Die einfachste Lösung ist, in der Firmenzentrale ein Mobiltelefon zu stationieren und dieses immer dann zu benutzen, wenn extern ein Mobiltelefon angerufen werden soll. Die Nutzung eines Mobiltelefons in der Zentrale ist jedoch recht unpraktisch, wenn mehrere Personen das Gerät benutzen wollen; es muß immer hin- und hergereicht werden und der zentrale Rufnummemspeicher ist nur im Mobiltelefon verfügbar. Zudem muß das Gerät immer wieder in die Ladestation.

Für dieses Problem gibt es zur Zeit folgende weiteren Lösungen:
a) alleinstehende, netzgespeiste GSM-Tischtelefone, z. B. von Siemens, die Telefonate nur im Mobilfunknetz ermöglichen,
b) Systemapparate für Telekommunikations-Anlagen, nachfolgend kurz TK-Anlagen genannt, mit festeingebautem GSM-Teil, z. B. Siemens optiset GSM für Hicom-Anlagen. Diese ermöglichen Telefonate ins Mobilfunknetz und über die TK-Anlage ins Festnetz. Auch andere Apparate an der Anlage können GSM-Gespräche führen.
c) GSM-Anschalteboxen für TK-Anlagen, z. B. TARIF von O. Vierling GmbH. Die Anschaltebox enthält ein fest eingebautes GSM-Teil mit Stromversorgung und ein Koppelinterface zur TK-Anlage, das eine Amtsleitung, a/b oder ISDN, simuliert und an einen Amtsleitungsport der Anlage angeschlossen wird.

Lösung a) ist kaum besser als das erst beschriebene "Gemeinschafts-Mobiltelefon". Für Festnetz und Mobiltelefon werden unterschiedliche Geräte benötigt.

Lösung b) ist nur von wenigen Herstellern verfügbar und für Kleinbetriebe relativ teuer, da meist schon eine etwas größere TK Anlage benötigt wird.

Lösung c) paßt zu jeder TK Anlage, ist aber auch relativ teuer. Dabei sind die Leistungsmerkmale moderner Telekommunikationsnetze nur eingeschränkt nutzbar, insbesondere bei analoger Anschaltung an a/b-Adern.

### Vorteile der Erfindung

Im Gegensatz zu Anschalteboxen mit eigener GSM-Hardware benötigt die erfindungsgemäße Lösung nur eine Schnittstelle für ein Mobiltelefon und ein konventionelles Mobiltelefon selbst. Da das Mobiltelefon meistens preisgünstig über einen Nutzervertrag vom Netzbetreiber erworben wird, entfällt die Anschaffung einer extra GSM-Hardware, die voll bezahlt werden muß. Auch besteht die Möglichkeit, in kurzen Zeitabständen ein neues Mobiltelefon nach dem aktuellen Stand der Technik vom Netzbetreiber zu beziehen und einsetzen zu können.

Ansonsten sind die gleichen Vorteile wie bei einer Anschaltebox vorhanden, nämlich die besseren akustischen Eigenschaften des Handapparats eines schnurgebundenen Telefons und die größere Distanz zwischen dem Körper des Benutzers und der Antenne des Mobiltelefons.

Gerade bei Kleinstbetrieben oder Heimarbeitsstellen besteht darüber hinaus die Möglichkeit, das Mobiltelefon auch unabhängig von der Schnittstelle mobil zu nutzen.

Weist die Schnittstelle sowohl einen bidirektionalen Signalisierungskanal als auch einen bidirektionalen Nutzkanal, z. B. für Sprachsignale auf, so können alle kommenden und gehenden Bedien- und Signalisierungsinformationen übermittelt werden. Dadurch ist die Voraussetzung geschaffen, alle Komfortfunktionen des Mobiltelefons als auch der TK-Anlage zu nutzen. Derartige Komfortfunktionen sind, soweit unterstützt, z. B. Rufnummemspeicher für alle Teilnehmer, Anrufliste, Rückfrage,
Makeln, Anrufweiterschaltung, Rückruf bei Besetzt, Konferenz, Freisprechen sowie Fax- und Datenübertragung. Die darüber hinaus vorgesehene mechanische Halterung erleichtert die Handhabung beim Koppeln und Entkoppeln des Mobiltelefons mit der Schnittstelle und ermöglicht zudem eine optimale Positionierung der eingebauten Antenne des Mobiltelefons.

Die Schnittstelle kann auch einen Stromversorgungsanschluß für das Mobiltelefon zum direkten Betrieb und/oder zum Laden von dessen Akku umfassen. Dadurch ist nicht nur ein zuverlässiger, wartungsfreier Betrieb an der Schnittstelle gewährleistet, das Mobiltelefon ist auch nach Entnahme aus der Halterung als konventionelles Mobiltelefon für die Dauer einer vollen Akku-Ladung sofort einsetzbar.

Außerdem kann die Schnittstelle einen Antennenanschluß umfassen, der zu einer externen Antenne führt. Hierdurch läßt sich eine stabilere, störungsfreiere Funkverbindung zur Kopfstation des Mobilfunknetzes herstellen und auch die HF-Einstrahlung in Geräte verringern, die in unmittelbarer Nähe des Mobiltelefons betrieben werden.

Die Schnittstelle kann in einem schnurgebundenen Telefonapparat, einem Beistellgerät, einem Basisgerät der TK-Anlage oder einem sonstigen mit der TK-Anlage verbundenen Telekommunikationsgerät mit einem in dessen Gehäuse integrierten Aufnahmeschacht für das Mobiltelefon angeordnet sein. Einerseits besteht dann die Möglichkeit, bei einer neuen TK-Anlage ein mit einer geeigneten Schnittstelle ausgestattetes Gerät einzusetzen, ohne daß dadurch ein erhöhter Montageaufwand entsteht, andererseits aber auch eine bestehende TK-Anlage kostengünstig nachzurüsten.

Im Falle eines mit der Schnittstelle und einem Aufnahmeschacht ausgebildeten schnurgebundenen Telefonapparats besteht die Möglichkeit, alle Komfortfunktionen des Mobiltelefons auch dann ausnutzen zu können, wenn die TK-Anlage selbst diese Funktionen nicht unterstützt, z. B. bei einer analogen TK-Anlage.

Als weitere Telekommunikationsgeräte kommen Telefaxgeräte, Anrufbeantworter, Modems, ISDN-Adapter oder mit Modem- oder ISDN-Karten ausgestattete Computer in Betracht. Dies ist gerade auch dann zweckmäßig, wenn nicht nur Sprechverbindungen zu Mobiltelefonen aufgebaut werden sollen, sondern auch Faxverbindungen oder Datenverbindungen.

Die Schnittstelle kann einen Prozessor umfassen, welcher programmgesteuert das Protokoll der Zubehörschnittstelle des Mobiltelefons auf das Protokoll der TK-Anlage und umgekehrt umsetzt. Zur Kompatibilität mit neuen Mobiltelefonen ist dann nur eine Änderung der Software nötig, die bei modernen TK-Anlagen auch ferngesteuert eingespielt werden kann.

Vorzugsweise wird die Schnittstelle für das Mobiltelefon von der Software der TK-Anlage als externer Port behandelt und ausgewählt, sobald die Vorwahl eines Mobilfunkanschlusses gewählt wird, oder bei einzelnen registrierten vollständigen Mobilfunknummern als interner Port. Für den Benutzer wird dadurch der Bedienungskomfort erhöht, denn er muß sich nicht um den günstigsten Tarif kümmern. Bei firmeninternen Mobilfunkanschlüssen wird außerdem die Anwahl vereinfacht.

Vorteilhafte Weiterbildungen der Erfindung sind in den abhängigen Ansprüchen angegeben.

### Zeichnungen

Ausführungsbeispiele der Erfindung sind in der Zeichnung dargestellt und in der nachfolgenden Beschreibung näher erläutert. In der beigefügten Zeichnung zeigen
Figur 1 eine schematische Darstellung der Erfindung, bei der die Schnittstelle in ein Tischtelefon integriert ist und
Figur 2 eine schematische Darstellung der Erfindung, bei der die Schnittstelle in ein Beistellgerät integriert ist.

### Beschreibung der Ausführungsbeispiele

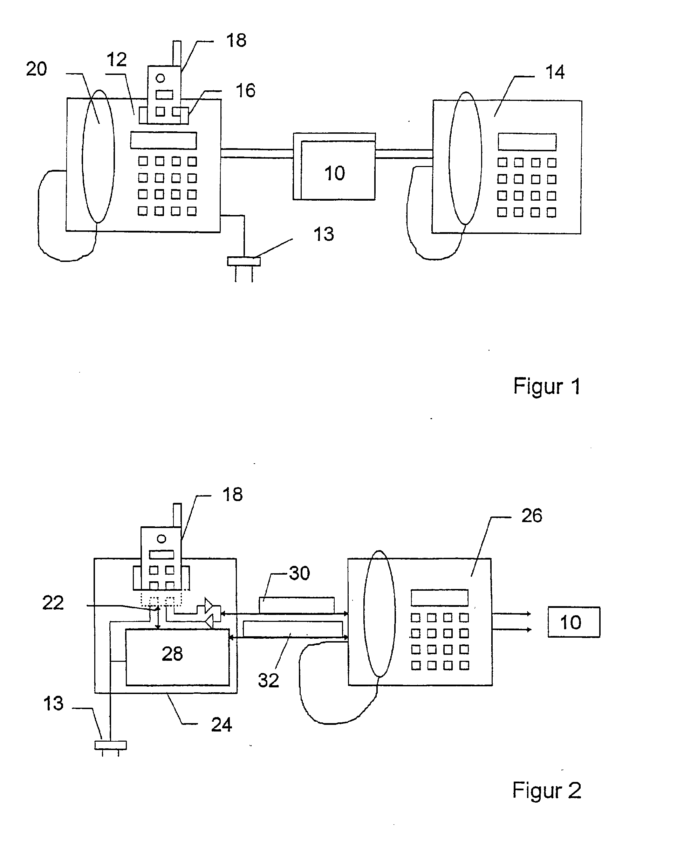

Figur 1 zeigt eine TK-Anlage 10 mit zwei System-Tischtelefonen 12, 14. Eines der System-Tischtelefone 12 ist mit einer elektrischen Schnittstelle und einem Aufnahmeschacht 16 versehen, in den ein handelsübliches Mobiltelefon 18 ähnlich wie bei einer Autofreisprecheinrichtung eingeschoben wird. Es wird darin mechanisch fixiert und elektrisch über die Freisprech/ Datenschnittstelle mit dem Tischtelefon 12 verbunden und mit Strom versorgt. Eine Stromversorgung 13 dient sowohl zum Betrieb an der Schnittstelle als auch zur Akku-Ladung des Mobiltelefons 18. Die Bedienung des eingeschobenen Mobiltelefons 18 erfolgt dann über die Tastatur des Tischtelefons 12; als akustischer Wandler dient der Handapparat 20 oder die Freisprecheinrichtung des Tischtelefons. Die Anpassung der Signalisierung zwischen Mobiltelefon 18 und Tischtelefon 12 erfolgt durch die Software des Tischtelefons12, der TK-Anlage 10 oder durch einen eigenen Mikrocontroller der Schnittstelle mit Software.

Bei Anschaltung an die TK-Anlage 10 kann das eingeschobene Mobiltelefon 18 auch von anderen Telefonapparaten 14 an der TK-Anlage 10 genutzt werden und ersetzt somit die Anschaltebox beim Stand der Technik. Eine optimale Nutzung der verfügbaren Komfortfunktionen von anderen Telefonapparaten aus erfordert wegen des nötigen Signalisierungskanals eine ISDN-Schnittstelle.

Mit der Erfindung können insbesondere kleine TK-Anlagen bei geringem finanziellen Aufwand temporär auf Mobilfunknetz-Kommunikation erweitert werden, indem ein eventuell schon vorhandenes Mobiltelefon 18 in das Tischtelefon 12 mit Aufnahmeschacht 16 eingeschoben wird. Bei Abwesenheit kann das Mobiltelefon 18 herausgezogen und wie gewohnt mobil genutzt werden. Im eingeschobenen Zustand können die Akkumulatoren wie in einer Ladestation geladen werden.

Figur 2 zeigt eine Realisierung der Erfindung, bei der die Schnittstelle 22 in ein Beistellgerät 24 zu bereits existenten Telefonen 26 integriert ist. Beispiele sind die ISDN-Systemtelefone TS13, TM13, TH13 von Bosch Telecom mit AEI-XY-Schnittstelle. Die AEI-Y Schnittstelle 32 umfaßt einen bidirektionalen seriellen Datenkanal, der eigentlich für Steuerung über ein PC-Programm gedacht ist und alle kommenden und gehenden Bedien- und Signalisierungsinformationen übermittelt. Zusätzlich ist eine analoge AEI-X-Schnittstelle 30 vorhanden, auf der das kommende und gehende Telefonsprachsignal übertragen werden kann. Die Protokollumsetzung zwischen Y-AEI-Schnittstelle 32 und Mobiltelefon-Steuerschnittstelle kann durch einen kleinen Mikrocontroller 28 erfolgen.

Das Beistellgerät 24 kann statt an ein Telefon auch direkt an eine TK-Anlage 10 angeschaltet werden, sofern diese die nötigen Schnittstellen besitzt. Es bleibt auch hier der Vorteil, daß ein kundenseitig vorhandenes Mobiltelefon 18 temporär für den Mobilfunknetzdienst der TK-Anlage 10 genutzt wird, und bietet deshalb den Kostenvorteil gegenüber einer dedizierten Mobilfunk-Anschaltebox.

## Patentansprüche

1. Vorrichtung zur direkten Herstellung von Telekommunikationsverbindungen von einer TK-Anlage (10) ins Mobilfunknetz,
dadurch gekennzeichnet, daß die Vorrichtung eine Schnittstelle (22) zu einem konventionellen Mobiltelefon (18) umfaßt, an die ein konventionelles Mobiltelefon (18) über dessen Zubehörschnittstelle anschließbar ist.

2. Vorrichtung nach Anspruch 1,
dadurch gekennzeichnet, daß die Schnittstelle (22) sowohl einen bidirektionalen Signalisierungskanal als auch einen bidirektionalen Nutzkanal zwischen Mobiltelefon (18) und TK-Anlage (10) und zusätzlich eine mechanische Halterung für das Mobiltelefon (18) umfaßt.

3. Vorrichtung nach Anspruch 1 oder 2,
durch gekennzeichnet, daß die Schnittstelle auch einen Stromversorgungsanschluß (13) für das Mobiltelefon (18) zum direkten Betrieb und/oder zum Laden von dessen Akku umfaßt.

4. Vorrichtung nach einem der Ansprüche 1 bis 3,
dadurch gekennzeichnet, daß die Schnittstelle auch einen Antennenanschluß umfaßt, der mit einer externen Antenne verbunden ist.

5. Vorrichtung nach einem der Ansprüche 1 bis 4,
dadurch gekennzeichnet, daß die Schnittstelle in einem schnurgebundenen Telefonapparat (12), einem Beistellgerät (24), einem Basisgerät der TK-Anlage oder einem sonstigen mit der TK-Anlage verbundenen Telekommunikationsgerät mit einem in dessen Gehäuse integrierten Aufnahmeschacht (16) für das Mobiltelefon (18) angeordnet ist.

6. Vorrichtung nach einem der Ansprüche 1 bis 5,
dadurch gekennzeichnet, daß die Schnittstelle (22) einen Prozessor (28) umfaßt, welcher programmgesteuert das Protokoll der Zubehörschnittstelle des Mobiltelefons (18) auf das Protokoll der TK-Anlage (10) und umgekehrt umsetzt.

7. Vorrichtung nach einem der Ansprüche 1 bis 6,
dadurch gekennzeichnet, daß die Schnittstelle für das Mobiltelefon (18) von der Software der TK-Anlage (10) bei abgehenden Verbindungen generell als externer Port behandelt und ausgewählt wird, sobald die Vorwahl eines Mobilfunkanschlusses gewählt wird oder bei einzelnen registrierten vollständigen Mobilfunknummem als interner Port.
